Europäisches Patentamt

European Patent Office

Office européen des brevets

(19)

(11) Numéro de publication : **0 115 735**
**B1**

(12) # FASCICULE DE BREVET EUROPÉEN

(45) Date de publication du fascicule du brevet :
09.11.88

(51) Int. Cl.⁴ : **G 01 N 27/90**

(21) Numéro de dépôt : **83430039.4**

(22) Date de dépôt : **02.12.83**

(54) **Dispositif pour détecter des criques sur les brames d'acier sortant d'une coulée continue.**

(30) Priorité : **28.01.83 FR 8301511**

(43) Date de publication de la demande :
**15.08.84 Bulletin 84/33**

(45) Mention de la délivrance du brevet :
**09.11.88 Bulletin 88/45**

(84) Etats contractants désignés :
**AT BE DE FR GB IT LU NL SE**

(56) Documents cités :
**EP-A- 0 067 935**
**DE-A- 2 027 278**
**FR-A- 2 282 640**
**FR-A- 2 345 252**
**FR-A- 2 390 729**

(73) Titulaire : **SOCIETE LORRAINE ET MERIDIONALE DE LAMINAGE CONTINU - SOLMER**
**Tour Franklin - 100-101 Quartier Boieldieu La Défense 8**
**F-92800 Puteaux (FR)**

(72) Inventeur : **Tivolle, Alain**
**La Rocade No. 10 Chemin des Rayettes**
**F-13500 Martigues (FR)**
Inventeur : **Roumegoux, Bernard**
**44, rue des Farigoules**
**F-13118 Entressen (FR)**
Inventeur : **Mittaine, Bernard**
**27, Les Terrasses des Oliviers**
**F-13800-Istres (FR)**
Inventeur : **Delhaye, Gérard**
**18, Impasse des Blés durs Le Hameau des Pignes**
**F-13800 Istres (FR)**
Inventeur : **Codur, Yves**
**4, Impasse Saint Simon**
**F-13004 Marseille (FR)**

(74) Mandataire : **Azais, Henri et al**
**c/o CABINET BEAU DE LOMENIE 14, rue Raphael**
**F-13008 Marseille (FR)**

EP 0 115 735 B1

## Description

La présente invention a pour objet un détecteur de criques sur les brames d'acier sortant d'un dispositif de coulée continue.

Le secteur technique de l'invention est celui de la sidérurgie.

Un dispositif de coulée continue est utilisé pour couler de nombreuses nuances d'acier. Parmi celles-ci, les aciers à moyen carbone, ayant une teneur en carbone comprise entre 0,08 % et 0,2 %, représentent sensiblement vingt pour cent de la production.

La coulée continue des aciers à moyen carbone présente des difficultés dues à l'apparition fréquente de défauts de surface ou criques qui doivent absolument être réparés avant que les brames ne soient étirées et laminées.

La solution consistant à retraiter systématiquement toutes les brames est très onéreuse, de l'ordre de 30 à 50 Frs/tonne, et il est donc du plus haut intérêt de réaliser des capteurs qui permettent de déceler les criques sur les brames à la sortie de la coulée continue pour dévier vers un retraitement ultérieur uniquement celles qui présentent des criques nécessitant un tel traitement.

On connaît des détecteurs de criques composés de bobines d'induction qui sont alimentées en courant alternatif et qui sont placées à proximité d'une pièce en acier. Le champ magnétique alternatif développe dans l'acier des courants de Foucault qui réagissent sur la bobine par un phénomène d'induction mutuelle. La présence d'une crique modifie sensiblement l'impédance et les courants de Foucault et entraîne une variation de l'amplitude de la tension d'excitation de la bobine et du déphasage entre la tension et le courant d'excitation de la bobine.

L'analyse de la tension d'excitation de la bobine par des circuits électroniques permet de fournir un signal électrique qui présente un bruit de fond en l'absence de crique et qui présente, en présence d'une crique, des pics d'amplitude tels que le rapport signal/bruit est supérieur à trois et permet donc d'obtenir un signal de détection d'une crique.

A ce jour, on a utilisé des détecteurs de criques par courant de Foucault sur des produits sidérurgiques relativement froids ayant une température inférieure à 300 °C et une surface sensiblement plane et peu rugueuse.

L'aiguillage automatique des brames sortant d'une coulée continue exige que la détection des criques soit réalisée sur des brames chaudes, ayant une température de l'ordre de 300 °C à 600 °C, dont la surface n'est pas bien plane par suite des déformations de la brame qui circule sur des rouleaux et dont la surface est très rugueuse et peut comporter des aspérités à bords très vifs, par exemple des grains d'acier qui proviennent de la coulée précédente et qui se soudent à la surface de la brame.

L'objectif de la présente invention est de procurer un dispositif de détection des criques à la surface d'une brame chaude sortant d'une coulée continue en vue de piloter un dispositif d'aiguillage automatique des brames défectueuses vers une unité de retraitement destinée à supprimer les criques.

Cet objectif est atteint en utilisant des bobines d'induction génératrices de courant de Foucault dont la structure et le montage mécanique sont conçus pour que, quelles que soient les déformations de la brame et la rugosité de la surface, l'extrémité des bobines soit séparée de la surface de la brame par une distance constante et très faible de l'ordre de 4 à 5 mm, sans que cela n'entraîne une usure trop rapide des capteurs qui doivent pouvoir résister à l'usure et à l'abrasion pendant toute une campagne de coulée continue afin de ne pas entraîner un arrêt de la coulée continue.

Il faut que l'entrefer entre l'extrémité du noyau d'une bobine et la surface de la brame soit très faible afin que le coefficient d'induction mutuelle soit élevé, que le rapport signal/bruit soit également élevé et que le capteur soit très fiable et qu'il détecte bien toutes les brames défectueuses.

Il faut tenir et guider les bobines des capteurs à une faible distance de la surface des brames sans intercaler entre l'extrémité de la bobine et la surface de la brame aucune pièce métallique qui perturberait le circuit magnétique reliant le noyau de la bobine à la brame. Il faut aussi que la largeur de l'entrefer reste constante quelle que soit la forme et la rugosité de la surface à contrôler car des variations très faibles de la largeur de l'entrefer entraîneraient des variations du coefficient d'induction mutuelle qui risqueraient d'entraîner des variations du signal électrique ayant des amplitudes du même ordre que les variations dues aux criques d'où un risque de dévier, par erreur, des brames exemptes de défauts. La nécessité de maintenir un entrefer de largeur constante entre le noyau de la bobine et la surface de la brame entraîne la nécessité de monter les capteurs sur des supports mobiles qui suivent fidèlement toutes les sinuosités de la surface et qui s'effacent temporairement devant les aspérités à front raide et ce suivi de la surface doit être assuré en appuyant les organes de guidage des capteurs contre la surface des brames avec une force très faible, de l'ordre de 1 newton, afin d'éviter d'engendrer un frottement qui conduirait à une usure très rapide des organes de guidage.

Une autre grande difficulté à résoudre est celle de la température du noyau et de la bobine des capteurs qui doit rester sensiblement constante et faible, de l'ordre de 20 °C, alors que l'extrémité de la bobine est placée à quelques millimètres de la surface d'une brame dont la température peut atteindre 600 °C.

Des températures supérieures à 20° risqueraient d'endommager les fils de la bobine et le noyau en ferrite et des variations de température entraîneraient des variations parasites de l'amplitude du signal électrique.

Les objectifs de l'invention sont atteints au moyen d'un dispositif qui comporte deux unités de détection de criques qui sont disposées de part et d'autre du passage des brames, et dont chacune porte un capteur vertical qui est maintenu au-dessus de la face supérieure de la brame, à proximité d'une arête, et plusieurs capteurs horizontaux qui sont situés à des niveaux différents et qui sont maintenus à proximité d'une face latérale de la brame.

Chaque unité de détection de criques comporte un bâti mobile qui est équipé de roulettes à axe vertical et des moyens pour déplacer ledit bâti latéralement par rapport à la brame et pour maintenir lesdites roulettes appuyées contre un flanc de la brame.

Ce bâti mobile comporte des colonnes de guidage et chaque unité de détection comporte une tête de détection qui coulisse verticalement le long desdites colonnes et qui porte lesdits capteurs et des galets à axe horizontal transversal qui sont maintenus appliqués contre la face supérieure de la brame par le poids de la tête coulissante et chaque unité de détection comporte, en outre, un vérin vertical à simple effet qui relève ladite tête en fin de cycle.

Chaque capteur comporte une bobine d'induction qui est placée avec du jeu à l'intérieur d'un boîtier cylindrique mobile ayant un fond en céramique, de faible épaisseur, qui est intercalé entre l'extrémité de la bobine et la brame et il comporte des moyens pour faire circuler de l'eau de refroidissement dans le jeu existant entre ladite bobine et la paroi latérale ainsi que le fond dudit boîtier.

Le boîtier mobile de chaque capteur comporte un corps creux cylindrique et un chapeau qui est fixé à l'extrémité avant dudit corps, lequel chapeau est équipé de galets dont les axes sont perpendiculaires à l'axe longitudinal de la brame et qui sont montés sur des supports qui peuvent coulisser parallèlement à l'axe dudit capteur.

Le boîtier mobile de chaque capteur est guidé axialement par une ou plusieurs douilles à billes et il est poussé vers l'avant par un piston qui se déplace avec du jeu dans un alésage axial et qui est soumis à une poussée vers l'avant qui est due à la perte de charge engendrée par une fuite d'air autour dudit piston et qui applique lesdits galets contre la surface de la brame avec une poussée faible et constante.

L'invention a pour résultat la détection automatique des criques sur les brames d'acier sortant d'une coulée continue, notamment sur les brames en acier à moyen carbone, et le signal de détection d'une crique sert à aiguiller automatiquement les brames défectueuses vers une unité de retraitement de celles-ci.

Les dispositifs selon l'invention comportant une tête mobile qui est déplaçable latéralement permettent de déplacer en bloc l'ensemble des quatre capteurs de chaque unité de détection pour les approcher de la brame en début de cycle ou pour les éloigner rapidement en cas de fonctionnement défectueux afin d'éviter une détérioration du dispositif par la brame et en fin de cycle.

Le déplacement latéral de la tête permet également d'adapter le dispositif de détection aux différentes largeurs des brames.

Le boîtier mobile qui équipe chaque capteur et qui est poussé par une différence de pression due à une fuite, permet de déplacer chaque capteur individuellement et de l'appliquer contre la brame avec une poussée très faible, de sorte que chaque capteur suit très fidèlement le contour de la brame, en restant à une distance constante de la surface de celle-ci, sans usure trop importante des galets de guidage.

La circulation d'eau de refroidissement entre la bobine d'induction et le boîtier mobile qui la contient, permet de maintenir l'extrémité avant de la bobine à une distance de 4 à 5 mm de la brame, tout en maintenant la bobine à une température de l'ordre de 20 °C.

Le fond du boîtier mobile en céramique a une épaisseur très faible, de l'ordre de 1 mm, de sorte que la présence de ce fond entre la bobine et la brame ne réduit pas sensiblement le coefficient d'induction mutuelle entre la brame et la bobine d'induction et la sensibilité des capteurs aux criques est très grande.

La description suivante se réfère aux dessins annexés qui représentent, sans aucun caractère limitatif, deux exemples de réalisation de dispositifs selon l'invention.

La figure 1 est une vue d'ensemble schématique du dispositif de détection.

La figure 2 est une vue de dessus d'une unité de détection de criques.

La figure 3 est une coupe axiale d'un capteur de criques.

La figure 4 est une vue frontale de la figure 3.

La figure 5 est une coupe axiale partielle d'un capteur de criques avec son système de rappel.

La figure 6 est une coupe axiale du dispositif de déplacement d'un capteur vertical.

La figure 7 est une vue d'ensemble en plan d'un deuxième dispositif selon l'invention.

La figure 8 est une coupe horizontale partielle de l'extrémité du bras pivotant et du système d'arrêt de rotation.

La figure 9 est une coupe verticale partielle du coulisseau reliant la tête de détection au bâti mobile.

La figure 10 est une vue de côté, en élévation et en coupe partielle de la tête de détection.

La figure 11 est une coupe selon XI-XI de la figure 10.

La figure 12 est une coupe par XII-XII de la figure 11.

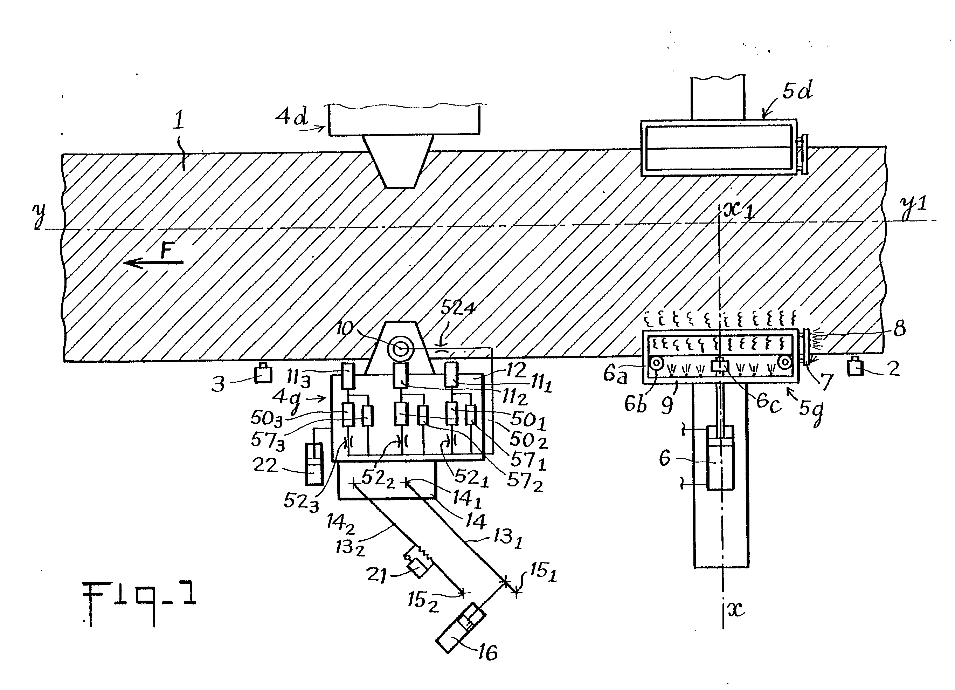

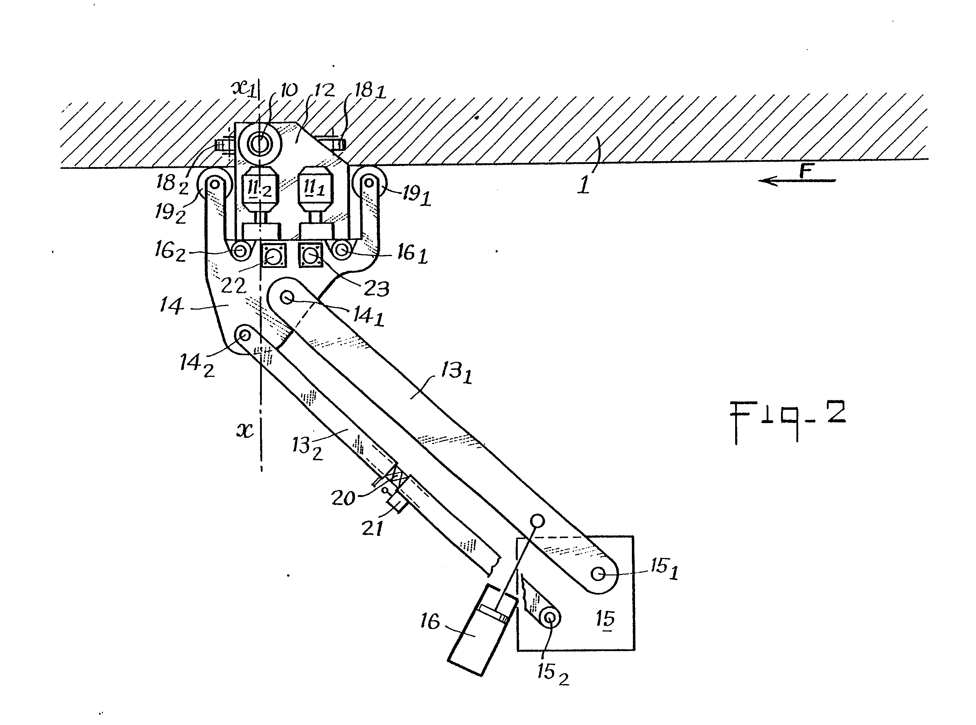

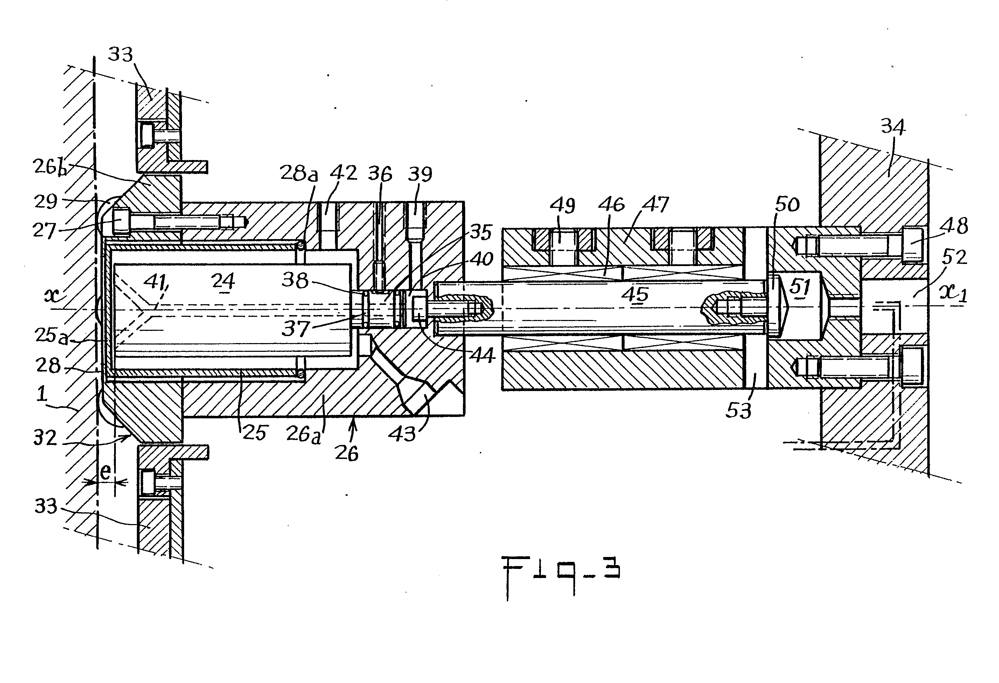

La figure 1 représente une vue de dessus d'une brame en acier 1 sortant d'une coulée continue. Le sens de défilement de la brame est représenté par la flèche F. La brame circule sur des rouleaux. Elle a une section sensiblement rectangulaire. La face supérieure et les faces latérales de la brame sont libres.

L'épaisseur des brames est constante, par exemple égale à 220 mm, la largeur peut varier par exemple entre 800 et 1 500 mm et le dispositif selon l'invention doit s'adapter aux différentes largeurs de la brame. De plus, la face supérieure et les faces latérales de la brame ne sont pas parfaitement planes.

La brame présente des ondulations et elle peut se déporter latéralement, de sorte que pour une brame de largeur constante, la face supérieure et les faces latérales présentent des déplacements verticaux ou latéraux dont l'amplitude peut atteindre 10 cm.

Un des problèmes à résoudre est de maintenir des capteurs à une distance constante, de l'ordre de 4 mm, des faces de la brame qui défile, malgré l'amplitude des déplacements de ces faces et ceci sans détérioration mécanique ou thermique des capteurs.

Un dispositif selon l'invention comporte, à l'amont, un premier détecteur 2 de présence de la brame qui est par exemple un détecteur de proximité d'une masse métallique. En fin de coulée, ce détecteur émet un signal électrique qui signale la fin de défilement d'une brame et qui commande automatiquement l'effacement des unités mobiles de détection.

Le dispositif comporte, à l'aval, un deuxième détecteur 3 du même type que le détecteur 2. Au début d'une coulée, le détecteur 3 émet un signal électrique qui signale l'arrivée d'une brame et qui commande automatiquement le début d'un cycle de travail des unités de détection.

Le dispositif comporte deux unités mobiles de détection des criques 4g et 4d disposées de part et d'autre d'une brame.

Le dispositif comporte deux unités de décalaminage et de refroidissement 5g, 5d qui sont placées en amont des unités respectives de détection des criques.

La figure 1 représente uniquement les unités 4g et 5g. Les unités 4d et 5d sont identiques aux unités 4g et 5g et elles sont symétriques de celles-ci par rapport à l'axe longitudinal y y1 de la brame.

Chaque unité de décalaminage et de refroidissement est déplaçable suivant un axe transversal x x1 perpendiculaire à l'axe y y1. Ce déplacement est commandé par un vérin de translation pneumatique à double effet 6 à retour rapide qui comporte un régulateur hydraulique de la vitesse d'approche de la brame. Le vérin 6 porte un bâti mobile 6a supportant des buses et des rampes d'injection d'eau.

Du côté amont le bâti mobile porte des buses de décalaminage 7 qui projettent des jets d'eau 8 à très haute pression contre la face latérale de la brame et contre une bande située en bordure de la face supérieure. L'eau est comprimée à 150 bars environ. Les buses sont aplaties et projettent des jets plats qui font sauter les croûtes superficielles oxydées (calamine).

Le bâti mobile porte, en outre, des rampes 9 munies de buses à jet plat qui projettent des jets d'eau comprimée à 5 bars environ contre la face latérale et contre une bande de la face supérieure située le long de l'arête afin de refroidir la surface de la brame à une température comprise entre 300 °C et 600 °C.

Le bâti mobile portant les rampes 7 et 9 est équipé de roulettes 6b à axe vertical qui viennent s'appuyer contre la face latérale de la brame. Il porte également un capteur pneumatique 6c qui coupe l'alimentation du vérin d'appui 6 lorsqu'il détecte la présence de la face latérale de la brame. Le vérin 6 se comporte alors comme un ressort pneumatique.

Si par suite d'un déplacement latéral de la brame le capteur détecte l'absence de contact contre le flanc de la brame, il ouvre l'alimentation pneumatique du vérin 6 jusqu'à ce que le contact soit rétabli.

Chaque unité de détection des criques comporte quatre capteurs de criques, un capteur 10 à axe vertical qui est situé au-dessus de la face supérieure de la brame, à proximité de l'arête et trois capteurs horizontaux $11_1$, $11_2$ et $11_3$ qui sont situés à trois niveaux différents échelonnés le long de la face latérale de la brame.

L'ensemble de quatre capteurs est monté sur une tête 12 qui peut coulisser verticalement par rapport à un bâti 14 qui est supporté par deux bras $13_1$, $13_2$ formant un parallélogramme articulé, d'une part sur le bâti 14 par les articulations $14_1$ et $14_2$ et, d'autre part, sur un bâti fixe 15 par les articulations $15_1$ et $15_2$. Un vérin 16 permet de déformer le parallélogramme articulé pour maintenir le bâti en appui contre le flanc de la brame. Le vérin 16 est un vérin pneumatique à double effet avec régulateur hydraulique de vitesse dans les deux sens de déplacement.

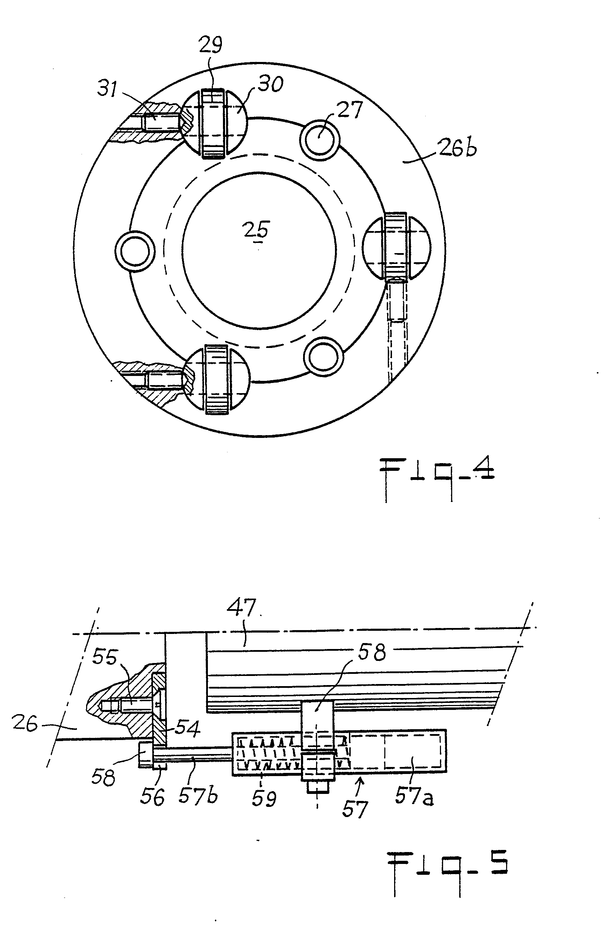

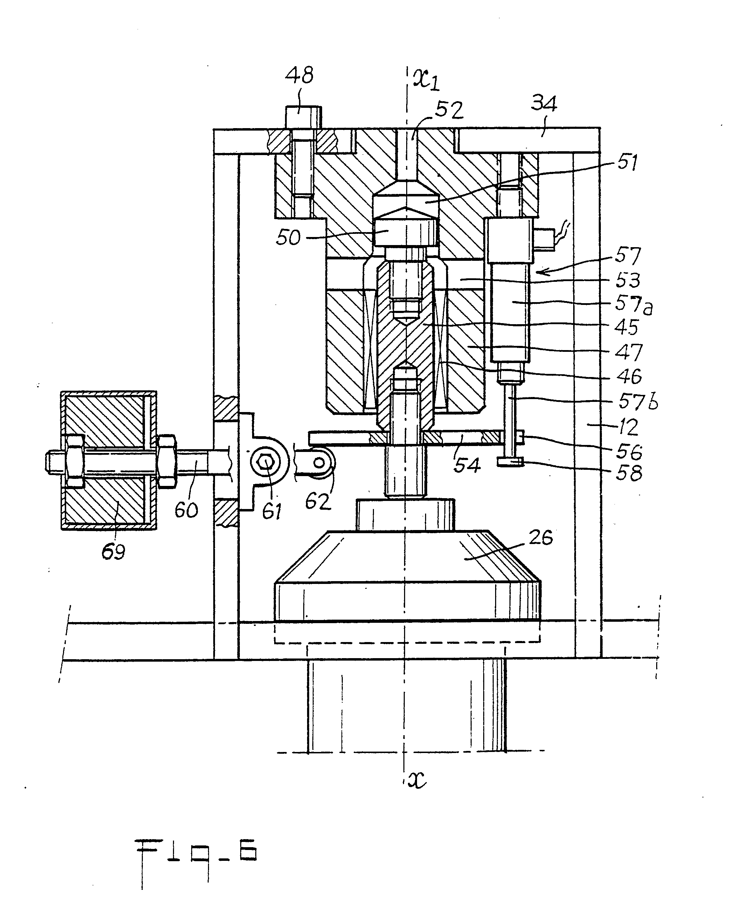

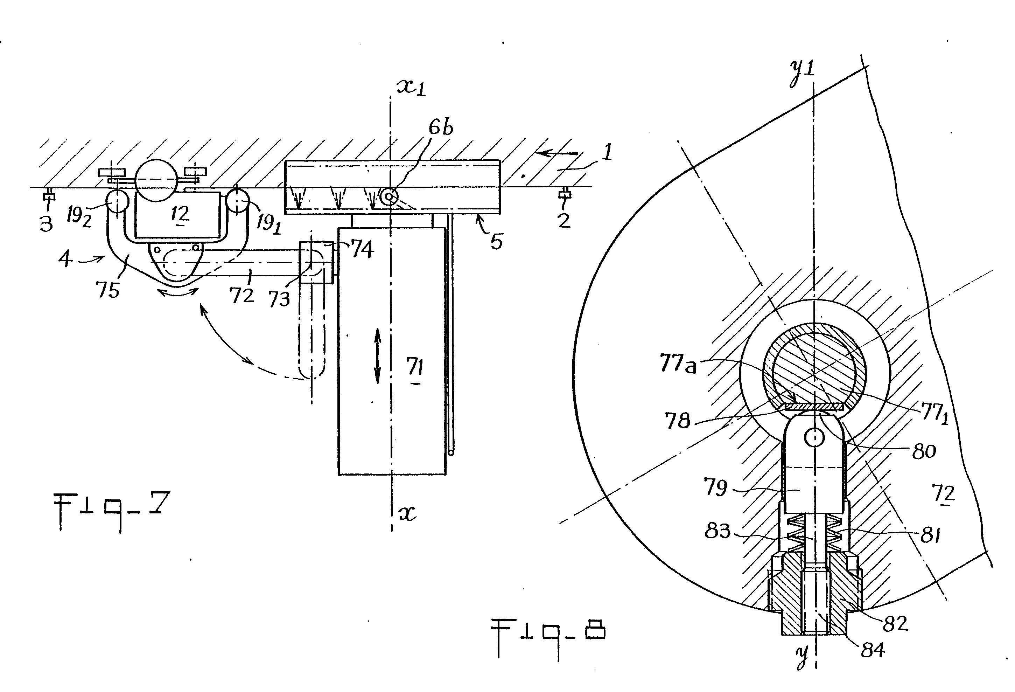

La figure 2 est une vue de dessus à plus grande échelle d'une unité de détection de criques 4. On voit sur cette figure le capteur vertical 10 et deux des capteurs latéraux $11_1$, $11_2$. Le troisième capteur $11_3$ est situé au-dessous du capteur $11_1$. On voit la tête 12 portant les quatre capteurs. La tête 12 est montée coulissante sur deux tiges de guidage ou colonnes verticales $16_1$, $16_2$ par l'intermédiaire de douilles à billes. Ces colonnes sont portées par un bâti 14 qui est composé par exemple de deux plaques reliées par des entretoises verticales.

La tête mobile 12 porte des roulettes ou galets $18_1$, $18_2$ à axe horizontal perpendiculaire au sens de déplacement de la brame, qui roulent sur la face supérieure de la brame 1 et qui sont maintenues appuyées contre celle-ci par le poids de la tête mobile.

Le bâti 14 comporte des galets ou roulettes à axe vertical $19_1$, $19_2$ qui roulent contre la face latérale de la brame et qui sont maintenus appliqués contre celle-ci par la poussée du vérin 16 sur le bras $13_1$.

Grâce au parallélogramme articulé, le bâti 14 se déplace en translation parallèle à l'axe transversal x x1. Toutefois, il faut que les capteurs horizontaux puissent suivre des ondulations horizontales de la face latérale et pour cela, il faut que le bâti 14 puisse pivoter légèrement de ± 5°. Cette liberté de rotation est obtenue grâce à un dispositif télescopique qui est monté sur le bras $13_2$ et qui

permet une légère variation de longueur de celui-ci.

Le dispositif télescopique 20 est équipé d'un capteur pneumatique de déplacement qui mesure les variations de longueur du bras $13_2$.

Dans le cas où la rotation du bâti 14 autour de l'axe $14_1$ dépasse un seuil normal qui est de l'ordre de ± 5°, par exemple par suite d'un défaut de relief de la face latérale de la brame, le signal émis par le capteur 21 commande automatiquement l'effacement de l'unité de détection.

Le bâti 14 porte un vérin pneumatique vertical à simple effet 22 qui soulève la tête mobile 12 et qui relève celle-ci dans une position où les capteurs se situent au-dessus de la brame. Le vérin 22 intervient en fin de cycle ou en cours de cycle en cas d'incident de fonctionnement par exemple lorsque le capteur 21 détecte une rotation anormale.

En début de cycle, l'alimentation pneumatique du vérin 22 est coupée et la tête 12 descend alors par gravité. Un régulateur hydraulique 23 est associé au vérin 22 pour réguler la vitesse de descente de la tête mobile.

La description qui précède permet d'expliquer les mouvements d'ensemble de l'unité de contrôle des criques indépendamment des mouvements individuels des capteurs qui seront expliqués ci-après.

Au début d'un cycle le parallélogramme $13_1$, $13_2$ est rétracté par le vérin 16 et la tête mobile est soulevée par le vérin 22, de sorte que les capteurs se trouvent placés au-dessus de la brame et sur le côté de celle-ci.

Lorsque le capteur 3 détecte le début de passage d'une brame, il émet un signal qui commande automatiquement le début d'un cycle. Le vérin 6 est alimenté et il rapproche de la brame le bâti portant les rampes de décalaminage et d'arrosage.

Le vérin 16 est alimenté et il pousse le bras $13_1$, jusqu'à ce que les galets $19_1$, $19_2$ viennent s'appuyer contre le flanc de la brame. Le vérin 16 reste normalement alimenté pendant tout le cycle pour maintenir les galets appuyés contre la brame.

L'alimentation du vérin 22 est ensuite coupée et la tête mobile 12 descend par gravité le long des colonnes de guidage $16_1$, $16_2$ jusqu'à ce que les galets $18_1$, $18_2$ viennent rouler contre la face supérieure de la brame. Les galets $18_1$, $18_2$ sont maintenus au contact de la brame par le poids de la tête mobile. La tête mobile est alors en position de travail.

A partir de cette position interviennent des organes de déplacement individuels des capteurs qui constituent un deuxième degré de positionnement des capteurs permettant de suivre les faces de la brame avec une grande précision, en mettant en jeu des forces et des pressions d'appui très faibles, de sorte que les capteurs suivent très fidèlement, sans aucune inertie, le contour des brames.

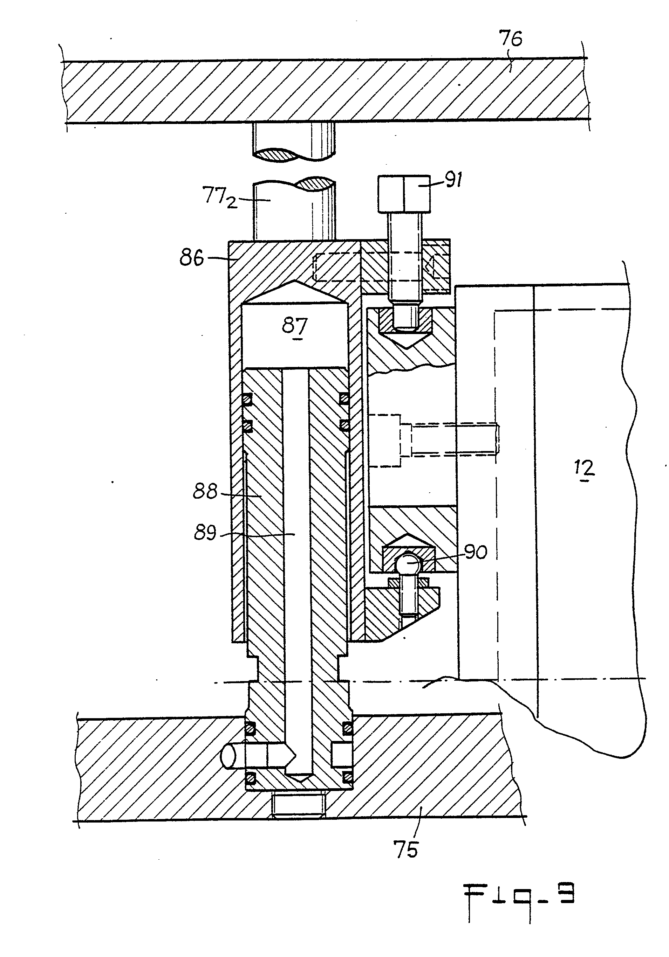

La figure 3 est une coupe axiale de l'un des capteurs de criques $11_1$, $11_2$ ou $11_3$ et du dispositif de déplacement horizontal pour maintenir celui-ci au contact du flanc de la brame 1.

Chaque capteur comporte une bobine d'induction 24 qui est composée d'un noyau ferromagnétique, par exemple d'un noyau en ferrite entouré par un circuit bobiné.

La bobine d'induction 24 est placée à l'intérieur d'un conteneur 25, en céramique réfractaire, par exemple en alumine très pure à 99 % d'alumine.

Le conteneur 25 a la forme d'un doigt de gant cylindrique qui entoure la bobine 24 et qui est fermé par un fond 25a qui est situé à l'extrémité avant ou extrémité externe, c'est-à-dire à l'extrémité qui est placée à proximité de la brame. Le fond 25a est intercalé entre l'extrémité avant de la bobine et le flanc de la brame. La paroi latérale cylindrique du conteneur 25 et le fond 25a de celui-ci sont séparés de la bobine par un jeu qui permet le passage d'eau de refroidissement.

L'épaisseur des parois et du fond du conteneur 25 est faible, de l'ordre de 2 mm pour les parois et de 1 mm pour le fond.

L'ensemble formé par la bobine 24 et le conteneur 25 est disposé à l'intérieur d'un boîtier de protection mécanique 26.

Le boîtier 26 comporte un corps métallique cylindrique creux 26a, par exemple un corps en alliage d'aluminium et un chapeau 26b en acier inoxydable qui est fixé au corps 26a par des vis 27 ou par tout autre moyen de fixation équivalent.

Le chapeau 26b délimite un alésage interne qui comporte, à l'extrémité externe, un épaulement très mince 28. Cet alésage est prolongé par un alésage coaxial au corps cylindrique 26a, ayant un même diamètre, légèrement supérieur au diamètre externe du conteneur 25 qui est logé dans cet alésage et qui vient en butée contre l'épaulement 28 et contre un épaulement 28a du boîtier.

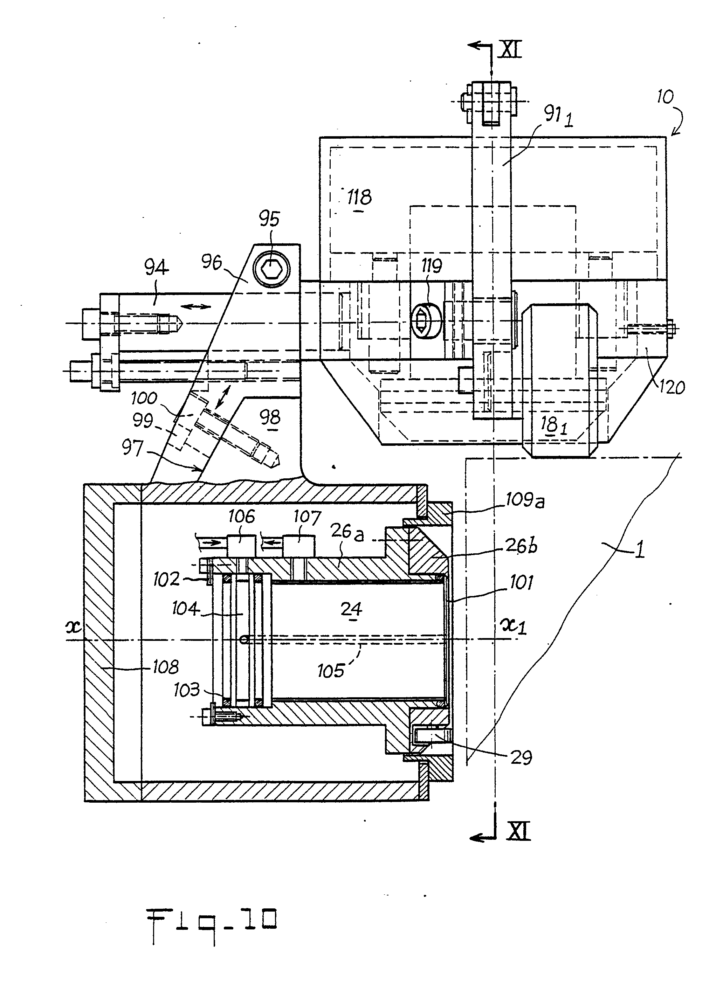

La figure 4 est une vue de face du chapeau 26b. On voit que ce chapeau est équipé de galets ou roulettes 29, au nombre de trois par exemple, disposées en triangle, dont les axes sont perpendiculaires à la direction y y1 de déplacement de la brame. L'axe de rotation 5 de chaque roulette est monté sur une chape portée par un support cylindrique 30 qui peut coulisser dans un alésage percé à travers le chapeau. Une vis pointeau 31 permet de bloquer et de débloquer les axes support 30 et d'ajuster le débordement des galets par rapport à la face externe du chapeau 26b.

A l'origine, on fixe les axes support 30 dans une position telle que la face externe du chapeau se trouve à environ 2 mm du flanc de la brame. Le coulissement des axes support 30 permet d'ajuster la distance séparant la face externe du chapeau du flanc de la brame pour compenser l'usure des galets contre la brame.

On voit sur les figures 3 et 4 que le chapeau 26b comporte un chanfrein périphérique 32 qui est taillé à 45° et qui déborde au-delà des galets 29.

La brame peut porter des aspérités ayant un relief accusé et un bord d'attaque sensiblement perpendiculaire à la surface de la brame, par exemple des grains d'acier refroidi qui restent sur le dispositif de coulée continue à la fin d'une coulée et qui se collent contre la brame d'une nouvelle coulée. Si l'un de ces bords venait buter contre le bord d'un capteur, la composante axiale de la poussée qu'il exercerait sur le boîtier du capteur serait très faible et risquerait d'être insuffisante pour repousser le capteur qui risquerait d'être gravement détérioré. Le chanfrein 32 évite ce risque. Il a un effet complémentaire de celui du capteur de déplacement 21 qui commande l'effacement automatique de l'ensemble de la tête de détection alors que les chanfreins 32 repoussent individuellement chaque capteur.

Les galets 29 peuvent être remplacés, en variante, par des patins de guidage.

On voit sur la figure 3 une plaque avant 33 et une plaque arrière 34 qui font partie de la tête 12 mobile. Chaque capteur est monté pour pouvoir coulisser parallèlement à son axe x x1 par rapport à la tête grâce à un dispositif de coulissement et d'appui qui va être décrit ci-après.

Auparavant, on indiquera que l'extrémité externe du noyau de chaque bobine est prolongé par un embout cylindrique 35 qui est engagé dans un alésage axial 40 du corps 26a et qui est bloqué dans celui-ci par une vis 36 qui permet d'ajuster la position axiale de la bobine par rapport au boîtier 26 et par rapport au conteneur 25. L'embout 35 comporte des gorges périphériques 37 dans chacune desquelles est placé un joint torique 38 qui assure l'étanchéité entre l'embout et le corps du boîtier. Le corps 26a comporte un canal 39 d'arrivée d'eau de refroidissement qui débouche dans l'alésage axial 40.

L'embout 35 et le noyau de la bobine comportent un canal axial 41 qui amène l'eau de refroidissement jusqu'à l'extrémité externe du noyau de la bobine. L'eau de refroidissement circule dans l'espace libre entre la bobine et le conteneur 25 et elle s'évacue par un canal de sortie 42 percé à travers le corps 26a. Bien entendu, les enroulements de la bobine sont isolés de l'eau en étant noyés dans une résine.

La bobine est alimentée en tension alternative par des conducteurs qui passent à travers un conduit 43.

Le boîtier 26 de chaque capteur est fixé par une vis 44, ou par tout autre moyen de fixation équivalent, sur un arbre 45 qui est monté dans des douilles à bille 46.

Les douilles à bille 46 sont montées dans un corps cylindrique 47 qui est fixé par des vis 48 ou par tout autre moyen de fixation équivalent sur la plaque arrière 34. Les douilles à bille sont bloquées dans le corps 47 par des vis de blocage 49. Ces douilles à bille sont roto-résistantes. Elles permettent les déplacements axiaux de l'arbre 45 et empêchent celui-ci de tourner. L'arbre 45 porte, à son extrémité externe, un piston ou vérin axial 50 qui coulisse avec du jeu dans un alésage 51 qui est relié par un conduit 52 à un régulateur de débit non représenté sur les figures 3 et 4 mais représenté schématiquement par les repères $52_1$, $52_2$, $52_3$ et $52_4$ sur la figure 1.

Le conduit 52 est alimenté en air comprimé sous une pression de l'ordre de 3 bars.

Le jeu entre le piston 50 et le cylindre 51 est de l'ordre de 0,1 mm.

Des conduits 53 sont percés à travers le corps 47 et ils font communiquer l'extrémité avant de l'alésage 51 avec l'extérieur.

L'air arrivant dans l'alésage 51 par le conduit 52 fuit à travers le jeu qui existe entre le piston et l'alésage et sort par les conduits 53. La perte de charge due à la fuite varie avec le débit d'air et elle exerce une poussée axiale sur le piston 50 qui est transmise au boîtier 26 et qui maintient les galets 29 appuyés contre la brame. En ajustant le débit grâce aux régulateurs de débit, on ajuste la poussée que l'on règle à une valeur faible, de l'ordre de 0,3 à 1,5 newton. Grâce à cette faible valeur de la poussée axiale, chaque capteur se déplace axialement dès qu'il est repoussé axialement même avec une force très faible, de telle sorte qu'il suit très fidèlement le contour de la brame sans que les galets 29 ne soient appuyés fortement contre celle-ci, ce qui évite une usure rapide de ceux-ci.

La figure 5 est une coupe axiale partielle d'un capteur passant par un plan différent du plan de la figure 3. On retrouve sur cette figure le boîtier 26 et le corps cylindrique 47. A l'extrémité arrière du boîtier 26, une plaque 54 est fixée par exemple par des vis 55. Cette plaque déborde au-delà de la paroi cylindrique du boîtier et l'extrémité qui déborde comporte une échancrure 56 ou en variante un trou ovalisé.

Chaque capteur comporte un dispositif d'effacement automatique du capteur qui est constitué par un petit vérin pneumatique à simple effet 57 dont le cylindre 57a est fixé au corps 47 par un collier 58 ou par tout autre moyen de fixation équivalent. La tige 57b du vérin est parallèle à l'axe x x1 du capteur. Elle passe à travers l'échancrure 56. Elle porte à son extrémité avant un écrou 58 formant une butée qui vient en appui contre la plaque 54 lorsque le vérin est rétracté. Le cylindre du vérin contient un ressort de rappel 59 qui tend à maintenir le piston du vérin en position arrière et qui a sur le piston une action antagoniste de celle de l'air comprimé. L'air comprimé qui alimente le vérin 57 est le même que celui qui alimente le cylindre 51 d'un capteur.

Le fonctionnement est le suivant.

Au début d'un cycle, l'air comprimé est coupé et le piston du vérin 57 est maintenu en position rétractée par le ressort 59. La butée 58 maintient donc le boîtier 26 du capteur en position effacée dans laquelle la face avant du capteur est sensiblement dans l'alignement de la face avant de la plaque avant 33. La tête de détection vient se mettre en place et lorsqu'elle a pris sa position de travail on envoie l'air comprimé sur les capteurs, ce qui a pour effet de comprimer le ressort 59 et de repousser la butée 58. Le boîtier 26 est libéré et les galets 29 sont appuyés contre la brame par la poussée sur le piston 51 et ils suivent le contour de la brame.

En cas de coupure accidentelle de l'air comprimé alimentant à la fois le vérin auxiliaire 57 et le vérin axial 50, 51, le vérin auxiliaire est rappelé automatiquement vers l'arrière par le ressort 59 et le capteur est maintenu en position rétractée. Il en est de même en fin de cycle.

On aurait pu obtenir un effacement automatique du capteur en équipant le vérin axial 50, 51 d'un ressort de rappel, mais dans ce cas, le ressort aurait exercé une force antagoniste à la poussée de l'air pendant tout le cycle de fonctionnement, de sorte que la force d'appui du capteur contre la brame n'aurait plus été constante.

La solution consistant à utiliser un vérin auxiliaire 57 qui déplace une butée 58 permet de libérer entièrement le capteur pendant un cycle de détection, de sorte qu'il est maintenu appliqué contre la brame par une force constante très faible, facilement réglable et indépendante de tout ressort donc beaucoup plus fiable.

On a représenté schématiquement sur la figure 1 le vérin axial $50_1$, $50_2$, $50_3$ appuyant chaque capteur horizontal contre le flanc de la brame et le vérin auxiliaire $57_1$, $57_2$, $57_3$ de chaque capteur horizontal. On a représenté également les régulateurs de débit $52_1$, $52_2$, $52_3$, $52_4$ équipant l'arrivée d'air de chaque vérin axial.

La figure 6 est une coupe axiale du dispositif de déplacement individuel du capteur vertical 10 équipant chaque tête de détection.

Les parties homologues à celles de la figure 3 sont représentées par les mêmes repères et elles remplissent les mêmes fonctions.

On retrouve sur cette figure la plaque 54 qui porte une échancrure 56 et porte une butée 58. La plaque 54 est fixée directement à l'axe 45 au lieu d'être fixée sur le boîtier 26, mais sa fonction est la même.

La seule différence entre le capteur vertical et les capteurs horizontaux réside dans la présence, sur un capteur vertical, d'un contrepoids 69 qui est monté sur un levier 60 articulé autour d'un axe horizontal 61. Le bras de levier qui est opposé au bras qui porte le contrepoids, porte un galet 62 qui est maintenu appuyé contre la plaque 54 par l'action du contrepoids. Le contrepoids 69 est monté sur une tige filetée, de sorte qu'on peut le déplacer pour régler le couple exercé autour de l'axe 61 afin d'équilibrer exactement le poids du capteur. Ainsi lorsque le vérin auxiliaire 57 a libéré la plaque 54, le capteur vertical est maintenu appliqué contre la face supérieure de la brame uniquement par la poussée constante de l'air contre le piston 50 du vérin axial et le poids du capteur, qui est beaucoup plus élevé que la poussée de l'air, n'intervient pas dans les forces d'appui du capteur qui restent faibles, constantes et réglables.

Les tubes alimentant chaque capteur en eau de refroidissement et en air comprimé sont des tubes très souples, par exemple des petits tubes en silicone, qui suivent les déplacements du capteur en exerçant sur celui-ci des forces élastiques très faibles et négligeables par rapport à la poussée qui s'exerce sur le vérin axial.

La plage dans laquelle chaque capteur détecte la présence d'une crique est une plage sensiblement circulaire ayant un diamètre sensiblement égal à celui de la bobine. Les boîtiers de capteur ont un diamètre externe de l'ordre de 80 mm et le flanc des brames a une hauteur de 200 mm.

Les trois capteurs horizontaux sont placés à trois niveaux différents et ils détectent la présence de criques sur toute la hauteur des deux flancs de la brame. Bien entendu, le nombre de capteurs horizontaux qui explorent les flancs de la brame pourrait être différent de trois.

Par contre, les capteurs verticaux 10 ne détectent les criques que sur deux bandes ayant une largeur de 80 mm situées le long des arêtes. La partie centrale de la face supérieure et la face inférieure des brames ne sont pas explorées. Une étude statistique a montré que pratiquement sur toutes les brames comportant des criques, on en trouve au voisinage des arêtes de la brame et la disposition adoptée qui est basée sur cette donnée statistique, permet donc de déceler, de façon fiable, la totalité des brames comportant des criques importantes.

La figure 3 montre que l'extrémité de chaque bobine d'induction 24 est séparée de la surface de la brame uniquement par un film d'eau de refroidissement et par le fond 25a du conteneur 25 qui a une épaisseur de l'ordre de 1 mm.

L'extrémité de la bobine est maintenue à une distance constante de la brame qui est de l'ordre de 4 à 5 mm. Cette faible distance est nécessaire pour que l'induction mutuelle entre la bobine et la brame soit élevée et que la sensibilité aux criques soit grande. Grâce au refroidissement par l'eau, la bobine est maintenue à une température de l'ordre de 20° malgré la proximité de la brame dont la température est supérieure à 300°.

Le conteneur en céramique 25 dont le fond est interposé entre la bobine et la brame est un organe important. Le fond 25a doit être très mince et malgré cela, le conteneur doit résister aux contraintes mécaniques et thermiques.

La céramique qui compose le conteneur est de l'alumine très pure, à 99 % ou de l'alumine faiblement dopée, qui a une bonne résistance mécanique aux chocs thermiques.

Chaque unité de détection comporte un détecteur pneumatique de circulation de l'eau de refroidissement des bobines d'induction.

Une chute de pression d'eau déclenche automatiquement l'effacement de l'unité de détection. De même, chaque unité de détection comporte un capteur de température de la tête. Au-delà d'un seuil de température, le capteur commande l'effacement de l'unité de détection.

L'installation comporte un capteur de vitesse de la brame qui délivre un signal électrique proportionnel à la vitesse de défilement de la brame. Ce signal électrique est utilisé pour réguler des vannes automatiques qui contrôlent le débit d'eau de refroidissement, de sorte que le débit soit proportionnel à la vitesse. Lorsque la vitesse de la brame est nulle, le signal commande automatiquement l'effacement des unités de détection et de refroidissement.

Les figures 7 à 12 représentent un autre mode de réalisation d'un dispositif selon l'invention.

La figure 7 représente une vue en plan. Les parties homologues sont représentées par les mêmes repères.

Le dispositif comporte deux unités identiques, symétriques à l'axe longitudinal de la brame et la figure 7 représente une seule unité. Celle-ci comporte une unité de décalaminage et de refroidissement 5 et une unité de détection 4, qui sont montées toutes les deux sur un même chariot 71 qui est déplacé en translation suivant l'axe x x1 perpendiculaire à la brame. Le chariot 71 est déplacé par un vérin pneumatique à double effet associé à un régulateur de vitesse hydraulique.

L'unité de décalaminage et de refroidissement 5 reste analogue à celle qui a été décrite. Elle comporte un galet 6b à axe vertical qui est maintenu appliqué contre le flanc de la brame par la poussée du vérin qui déplace le chariot 71. Lorsque le galet 6b est en appui contre la brame, la pression d'alimentation du vérin est réduite.

L'unité de détection 4, qui sera décrite en détail, est montée sur un bras horizontal 72 qui est relié au chariot 71 par une articulation 73 à axe vertical. Un vérin pneumatique oscillant 74 entraîne le bras pivotant 72 et permet de le faire pivoter de 95° environ autour de l'axe 73. On a représenté en traits pleins la position de travail du bras et en traits mixtes la position de repos.

Le montage de l'unité de détection 4 sur un bras pivotant 72 qui est articulé sur le chariot 71 qui porte également l'unité de décalaminage et de refroidissement présente l'avantage que le décalage longitudinal entre les capteurs et l'unité de refroidissement est constant, quelle que soit la largeur des brames. La température de la brame sous les capteurs reste donc sensiblement uniforme et la précision des mesures électroniques est améliorée.

Le montage de l'unité de détection sur un bras pivotant 72 permet d'éloigner l'unité de la brame en la faisant pivoter d'un quart de tour, ce qui éloigne l'unité de la zone soumise au rayonnement de la brame et facilite les interventions d'entretien sur l'unité de détection.

L'unité de détection comporte un bâti 14 qui comporte une plaque inférieure 75 en forme de fer à cheval portant deux roulettes ou galets $19_1$, $19_2$ à axe vertical qui sont maintenus appliqués contre le flanc de la brame par le couple exercé par le vérin rotatif 74.

Le bâti 14 comporte une plaque inférieure 75 et une plaque supérieure 76 qui sont reliées entre elles par trois colonnes verticales 77.

La figure 8 représente en $77_1$ une des trois colonnes qui est solidaire de la plaque inférieure 75 et de la plaque supérieure 76 et qui est reliée à l'extrémité libre de l'arbre 72 par un dispositif qui permet une liberté de rotation du bâti 14 par rapport à l'arbre de l'ordre de ± 7°5 par rapport à la position d'équilibre. L'arbre $77_1$ comporte un méplat 77a sur lequel est fixée une pièce d'usure 78. Le bras pivotant 72 porte un doigt de blocage 79 d'axe y y1 qui est disposé dans un alésage radial du bras et qui est équipé, à son extrémité avant, d'un galet 80. Le doigt 79 est poussé vers l'avant par un organe élastique 81 formé par exemple par un empilement de rondelles élastiques ou par un ressort. Un bouchon fileté 82 permet de régler la précontrainte de l'organe élastique par exemple la compression des rondelles.

Le bouchon 82 est percé d'un alésage fileté axial dans lequel pénètre une tige 83 solidaire du doigt 79. Une vis 84 est vissée dans l'alésage fileté et sert de butée réglable à la tige 83.

Le fonctionnement est le suivant.

Lorsque le flanc de la brame présente des sinuosités, il exerce des poussées sur les galets $19_1$, $19_2$ qui créent un couple qui entraîne le bâti 14 en rotation autour de l'arbre $77_1$. Le doigt 79 est repoussé. Il comprime les rondelles 81 jusqu'à ce que la tige 83 arrive en butée, ce qui limite l'amplitude angulaire à environ 7°5, de part et d'autre de la position d'équilibre dans laquelle le méplat 77a est perpendiculaire à l'axe y y1. La poussée des ressorts 81 sur le doigt 79 exerce sur l'arbre $77_1$ un couple antagoniste qui tend à ramener le bâti 14 à sa position d'équilibre, dès que le flanc de la brame redevient plan et perpendiculaire à l'axe x x1.

Le dispositif représenté sur la figure 8 remplit la même fonction que le dispositif télescopique 20 de la figure 2. Comme celui-ci, le dispositif selon la figure 8 est équipé d'un interrupteur de fin de course qui est fermé lorsque le déplacement angulaire relatif entre la tête 14 et le bras 72 dépasse un seuil normal de l'ordre de ± 7°5 et qui commande automatiquement le retrait du chariot 71 et l'effacement de la tête.

La figure 9 représente la liaison entre la tête de détection 12 et le bâti 14. On voit sur cette figure la plaque inférieure 75 du bâti 14 qui est reliée à la plaque supérieure 76 par deux colonnes en acier trempé dont une seule $77_2$ est représentée et qui servent à guider un coulisseau 86. A l'intérieur du coulisseau 86 est logé un cylindre 87 dans lequel se trouve un piston 88 qui prend appui contre la plaque 75.

Le cylindre 87 et le piston 88 constituent un vérin hydraulique à simple effet qui est alimenté en huile par un conduit 89 qui traverse le piston.

L'alimentation en huile du vérin est fournie par un échangeur de pression air-huile qui est installé dans le bras 72.

Lorsqu'on envoie l'huile sous pression dans le cylindre, on relève la tête 12 portant les capteurs. Pendant la détection des criques, le vérin de relevage de la tête n'est pas alimenté et la tête s'appuie sur le dessus de la brame sous l'effet de son poids. La tête 12 est reliée au coulisseau 86 par deux rotules 90 sur lesquelles la tête prend appui et elle est bloquée par une vis 91.

Les figures 10, 11 et 12 représentent des vues de la tête 12 portant les capteurs.

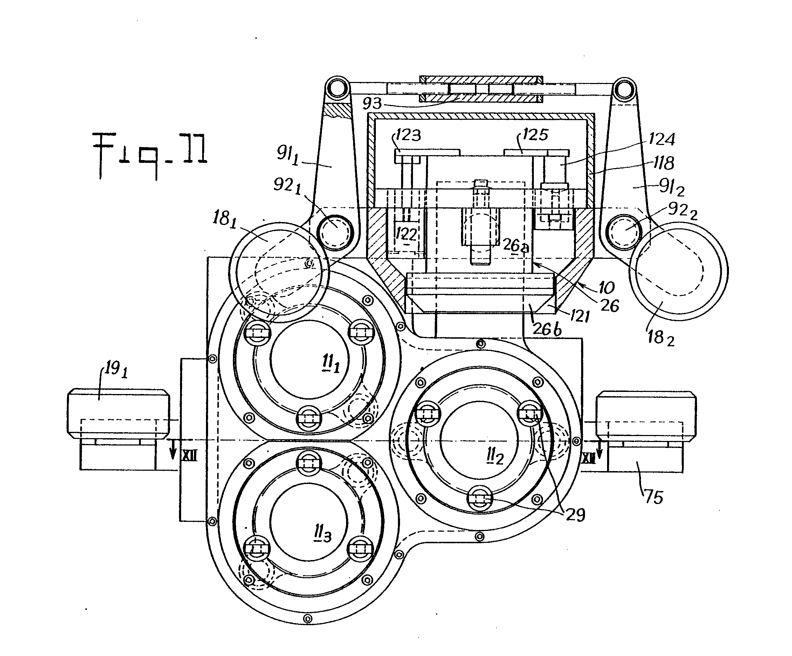

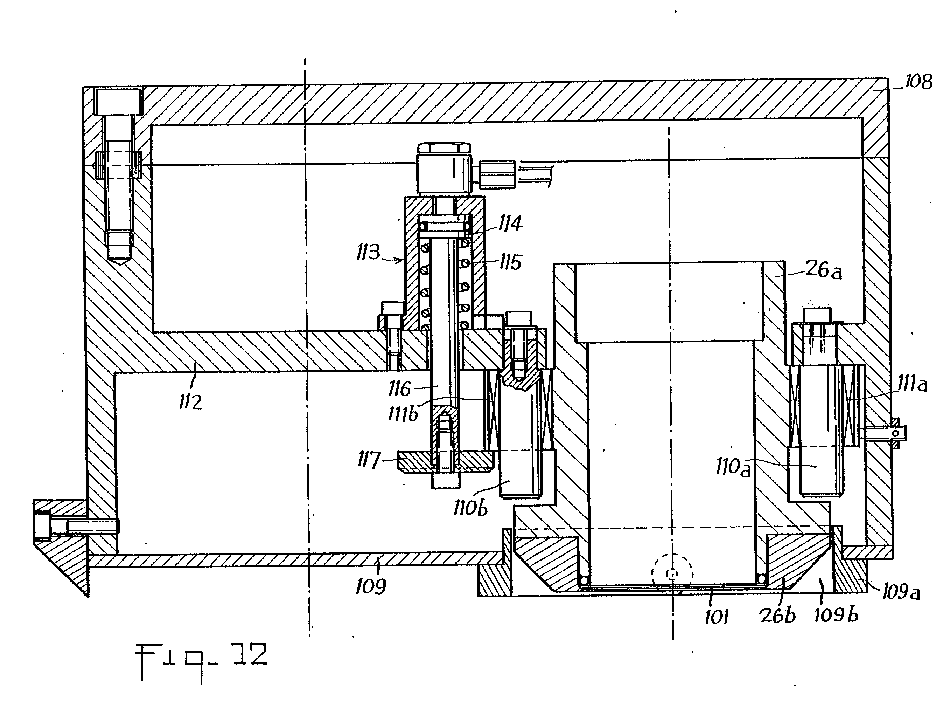

La figure 11 est une coupe de la figure 10 par la ligne XI-XI. La figure 12 est une coupe horizontale de la figure 11 par la ligne XII-XII.

On a représenté sur la figure 10 une partie du flanc d'une brame 1 et le bord du dessus de celle-ci.

On voit sur la figure 11 les deux extrémités de la plaque inférieure 75 en forme de fer à cheval qui portent chacune un galet $19_1$, $19_2$ à axe vertical situé au-dessus de la plaque. La tête 12 porte, comme dans le mode de réalisation selon les figures 1 à 6, trois capteurs de criques à axe horizontal $11_1$, $11_2$ et $11_3$, disposés en triangle et que l'on voit de face sur la figure 10 et un capteur à axe vertical 10.

L'ensemble de la tête est monté sur le coulisseau 86 comme le montre la figure 9 et peut donc coulisser verticalement. La tête comporte deux galets $18_1$, $18_2$ dont l'axe est horizontal et transversal à la brame.

Lorsque le vérin 88 n'est pas alimenté, ces galets roulent sur le dessus de la brame.

Les galets $18_1$ et $18_2$ sont portés chacun par un levier coudé $91_1$, $91_2$ articulé en $92_1$, $92_2$ sur la tête.

Les extrémités des deux leviers sont reliées entre elles par un tendeur 93 qui permet de faire pivoter les leviers et de régler la hauteur des galets par rapport à la tête. Le capteur vertical 10 est monté sur un axe transversal 94 qui est bloqué par une vis 95, dans un support fendu 96, ce qui permet de régler la position transversale du capteur vertical. Le support 96 comporte une rampe inclinée 97 qui prend appui sur une portée inclinée, solidaire d'une pièce 98 elle-même solidaire du boîtier qui contient les trois capteurs horizontaux. Le support 96 comporte des trous ovalisés 99 et des vis 100 qui permettent de déplacer le support 96 en hauteur pour régler la hauteur de l'ensemble des capteurs horizontaux par rapport au capteur vertical.

La figure 11 représente une vue frontale des capteurs horizontaux et on voit sur celle-ci que le chapeau 26b de chaque capteur est équipé de roulettes 29 comme dans le mode de réalisation représenté sur la figure 4.

La figure 10 représente une coupe axiale d'un capteur horizontal. Celui-ci comporte un boîtier cylindrique 26a, en alliage d'aluminium et un chapeau 26b.

L'extrémité avant du boîtier cylindrique est obturée par un disque mince 101 en céramique qui remplace le conteneur 25 du mode de réalisation précédent. A l'intérieur du boîtier se trouve la bobine 24 qui détecte les courants de Foucault. Celle-ci est maintenue dans le boîtier par une plaquette 102. La bobine 24 est enrobée d'une résine isolante. La paroi externe et le fond de la bobine sont séparés par un jeu des parois du boîtier 26a et du disque 101.

L'extrémité arrière de la bobine comporte deux joints toriques 103 qui sont situés de part et d'autre d'une gorge 104 qui communique avec une arrivée d'eau de refroidissement et avec des canaux 105 qui amènent l'eau dans l'espace situé entre la face frontale de la bobine et le disque 101. Les repères 106 et 107 représentent l'arrivée d'eau froide et le retour d'eau.

Les trois capteurs horizontaux $11_1$, $11_2$ et $11_3$ sont disposés à l'intérieur d'une chambre 108 dans laquelle on envoie de l'air légèrement comprimé. La face avant de cette chambre est fermée par une plaque 109 portant trois bagues 109a qui délimitent trois alésages 109b disposés en triangle et le chapeau 26b de chacun des capteurs coulisse avec du jeu dans l'un des alésages, de sorte qu'il existe une fuite d'air comprimé à travers ce jeu. Chaque boîtier de capteur est mobile et fait fonction de piston qui est déplacé sous l'effet de la poussée engendrée par la faible différence de pression due à la fuite et cette poussée maintient les galets 29 appliqués contre le flanc de la brame et dans cette position de travail, l'extrémité avant de la bobine 24 se trouve placée à quelques millimètres du flanc de la brame et séparée de celui-ci par le disque en céramique 101 et par un film d'eau.

La figure 12 montre que chaque boîtier de capteur horizontal est guidé dans son déplacement par deux tiges de guidage 110a, 110b et par des douilles à bille 111a, 111b, de sorte que les frottements sont très faibles. Les tiges 110a sont portées par une cloison 112 qui fait partie de la chambre 108.

La figure 12 représente un vérin pneumatique à simple effet 113 qui sert à reculer simultanément les trois capteurs horizontaux.

Le piston 114 du vérin est repoussé vers l'arrière par un ressort 115 antagoniste de la poussée de l'air comprimé. La tige 116 du vérin porte à son extrémité une plaque de butée 117 qui prend appui contre la douille à bille 111b du capteur.

La figure 12 représente un seul des trois capteurs horizontaux pour la clarté du dessin.

Il est précisé que le vérin 113 est placé au centre des trois capteurs et que la plaque de butée 117 prend appui sur les douilles à bille de guidage des trois capteurs.

La figure 12 représente le capteur $11_2$ en position rétractée qui correspond à celle où le vérin 113 n'est pas alimenté en air comprimé. L'action du ressort de rappel 115 maintient les trois douilles à bille en butée contre la cloison 112 et les têtes 26b sont rentrées à l'intérieur de la chambre 108.

L'air comprimé qui alimente le vérin 113 est le même que celui qui est envoyé à l'intérieur de la chambre 108.

Ainsi, en cas de panne d'alimentation en air comprimé, les trois capteurs sont rétractés automatiquement et simultanément.

La figure 11 représente une coupe axiale du capteur vertical 10, qui est placé à l'intérieur d'un boîtier cylindrique vertical 118, à l'intérieur duquel on envoie de l'air comprimé.

Le boîtier 118 est fixé par des vis 119 sur un collier 120 qui prolonge l'axe 94, de sorte que l'on peut régler la hauteur du capteur par rapport à la tête.

Le capteur vertical comporte, comme chaque capteur horizontal, un boîtier mobile composé d'un corps cylindrique 26a et d'un chapeau 26b, et d'un disque en céramique 101, à l'intérieur duquel est placée une bobine refroidie par une circulation d'eau.

Le fond du boîtier 118 comporte un orifice circulaire 121 dont le diamètre est légèrement supérieur à celui du chapeau 26b, de sorte qu'il y a une fuite entre la périphérie du chapeau et le boîtier fixe 118. Le boîtier 26 fait fonction de piston et il est guidé par des douilles à bille le long de deux colonnes verticales non visibles dans le plan de coupe.

Le capteur vertical comporte un vérin de rappel ou de relevage 122 qui est un vérin à simple effet alimenté en air comprimé en même temps que l'intérieur du boîtier 118. L'extrémité supérieure de la tige du vérin 122 prend appui contre une plaque de butée 123, qui est fixée au boîtier mobile 26. Le vérin 122 comporte un ressort de rappel, antagoniste de l'action de l'air comprimé. En l'absence d'air comprimé, le ressort pousse la plaque 123 vers le haut et maintient le capteur vertical dans la position relevée représentée sur la figure 10. Lorsque le vérin 118 est alimenté en air, le ressort est comprimé et le boîtier mobile 26 est libéré et les galets du chapeau sont maintenus appliqués contre le dessus de la brame par la poussée de l'air et par son poids.

Dans le mode de réalisation représenté sur la figure 6, le poids de la partie mobile du capteur vertical est compensé par un contrepoids. Dans le mode de réalisation selon les figures 10, 11 et 12, le capteur vertical comporte un vérin pneumatique à perte de charge vertical 124 qui est intercalé entre le boîtier fixe 118 et une plaque de butée 125 qui est fixée au boîtier mobile 26. La section du piston et la pression d'alimentation de ce vérin sont calculées pour que la poussée verticale équilibre le poids du capteur, de telle sorte que celui-ci soit appliqué contre le dessus de la brame par une poussée verticale faible qui est due uniquement à la légère surpression de fuite à l'intérieur du boîtier 118, de sorte que le capteur vertical peut suivre très fidèlement la surface supérieure de la brame.

**Revendications**

1. Dispositif pour détecter des criques sur les brames d'acier (1) sortant d'une coulée continue au moyen de capteurs (10, $11_1$, $11_2$, $11_3$) à courants de Foucault, qui comportent une bobine d'induction (24) qui est alimentée en tension alternative et des moyens pour détecter des variations de ladite tension qui indiquent la présence d'une crique, caractérisé en ce qu'il comporte deux unités de détection de criques (4g, 4d) qui sont disposées de part et d'autre du passage des brames et chaque unité comporte un capteur vertical (10) qui est maintenu au-dessus de la face supérieure de la brame (1), à proximité d'une arête de celle-ci et plusieurs capteurs horizontaux ($11_1$, $11_2$...$11_n$) qui sont situés à des niveaux différents et qui sont maintenus à proximité d'une face latérale de la brame (1).

2. Dispositif selon la revendication 1, caractérisé en ce qu'il comporte, en outre, deux unités (5g, 5d) de décalaminage et de refroidissement qui sont situées de part et d'autre du passage des brames, en amont desdites unités de détection (4g, 4d), et chaque unité de décalaminage et de refroidissement est montée sur un bâti mobile (6a) qui est déplacé transversalement à la brame par un vérin et qui porte un ou plusieurs galets (6b) à axe vertical qui sont maintenus appliqués contre le flanc de la brame, des buses de décalaminage (7) qui projettent contre la face latérale et contre une bande située en bordure de la face supérieure de la brame des jets d'eau (8) à très haute pression, de l'ordre de 150 bars et des buses de refroidissement (9) qui arrosent la face latérale et le bord de la face supérieure de la brame.

3. Dispositif selon l'une quelconque des revendications 1 et 2, caractérisé en ce que chaque unité de détection de criques comporte un bâti mobile (14) qui est équipé de roulettes à axe vertical et des moyens pour déplacer ledit bâti latéralement par rapport à la brame et pour maintenir lesdites roulettes appuyées contre un flanc de la brame.

4. Dispositif selon la revendication 3, caractérisé en ce que ledit bâti mobile (14) comporte des colonnes de guidage ($16_1$, $16_2$, 77, 85) et chaque unité de détection comporte une tête de détection (12) qui coulisse verticalement le long desdites colonnes et qui porte lesdits capteurs (10, $11_1$, $11_2$, $11_3$) et des galets à axe horizontal transversal ($18_1$, $18_2$) qui sont maintenus appliqués contre la face supérieure de la brame par le poids de la tête coulissante et chaque unité de détection comporte, en outre, un vérin vertical à simple effet (22, 87, 88) qui relève ladite tête (12) en fin de cycle.

5. Dispositif selon l'une quelconque des revendications 1 à 4, caractérisé en ce que chaque capteur (10, $11_1$, $11_2$, $11_3$) comporte une bobine d'induction (24) qui est placée avec du jeu à l'intérieur d'un boîtier cylindrique mobile (26) ayant un fond (25a, 101) en céramique, de faible épaisseur, qui est intercalé entre l'extrémité de la bobine et la brame et il comporte des moyens pour faire circuler de l'eau de refroidissement dans le jeu existant entre ladite bobine (24) et la paroi latérale ainsi que le fond dudit boîtier.

6. Dispositif selon la revendication 5, caractérisé en ce que ledit boîtier mobile (26) comporte un corps creux cylindrique (26a) et un chapeau (26b) qui est fixé à l'extrémité avant dudit corps, lequel chapeau (26b) est équipé de galets (29) dont les axes sont perpendiculaires à l'axe longitudinal (y y1) de la brame et qui sont montés sur des supports qui peuvent coulisser parallèlement à l'axe (x x1) dudit capteur.

7. Dispositif selon la revendication 6, caractérisé en ce que ledit boîtier mobile (26) est guidé axialement par une ou plusieurs douilles à billes (46, 111a, 111b) et il est poussé vers l'avant par un piston (50, 26b) qui se déplace avec du jeu dans un alésage axial (51, 109b, 121) et qui est soumis à une poussée vers l'avant qui est due à la perte de charge engendrée par une fuite d'air autour dudit piston et qui applique lesdits galets (29) contre la surface de la brame avec une poussée faible et constante.

8. Dispositif selon la revendication 7, caractérisé en ce que chaque capteur est associé à un vérin pneumatique auxiliaire (57, 113) à simple effet, qui est alimenté en air en parallèle avec ladite fuite d'air et qui comporte un ressort (59, 115) antagoniste de la pression d'air et la tige (57b, 116) dudit vérin porte une butée (58, 117) qui bloque ledit capteur en position rétractée en cas de coupure d'air accidentelle ou en fin de cycle.

9. Dispositif selon la revendication 3, caractérisé en ce que ledit bâti mobile (14) est supporté par deux bras parallèles (13$_1$, 13$_2$) formant un parallélogramme articulé respectivement audit bâti mobile par des articulations à axe vertical (14$_1$, 14$_2$) et à un bâti fixe par des articulations à axe vertical (15$_1$, 15$_2$) et un vérin pneumatique à double effet (16) actionne l'un desdits bras pour déplacer ledit bâti mobile (14) latéralement par rapport à la brame.

10. Dispositif selon la revendication 9, caractérisé en ce que l'un desdits bras (13$_2$) comporte un dispositif télescopique (20) qui autorise une faible variation de longueur dudit bras et une rotation limitée dudit bâti et il comporte, en outre, un capteur de déplacement (21) qui détecte une variation de longueur dudit bras (13$_2$) excédant une valeur limite et qui commande automatiquement ledit vérin (16).

11. Dispositif selon la revendication 7, caractérisé en ce que le capteur vertical (10) de chaque unité de détection comporte un contrepoids (69) qui équilibre le poids de la partie mobile dudit capteur.

12. Dispositif selon la revendication 7, caractérisé en ce que le capteur vertical (10) de chaque unité de détection comporte un vérin d'équilibrage (124) qui équilibre le poids de la partie mobile dudit capteur.

13. Dispositif selon la revendication 2, caractérisé en ce que l'unité de décalaminage (5) et l'unité de détection (4) situées d'un même côté de la brame, sont montées sur un même chariot (71) qui est déplacé suivant un axe (x x1) perpendiculaire à l'axe longitudinal de la brame.

14. Dispositif selon les revendications 3 et 13, caractérisé en ce que ledit bâti mobile (14) est porté par un bras (72) qui est relié audit chariot (71) par une articulation (73) à axe vertical, laquelle articulation comporte un vérin oscillant (74) qui entraîne ledit bras dans une rotation de l'ordre de 90° pour le disposer parallèlement au flanc de la brame en position de travail et parallèle à l'axe (x x1) dudit chariot en position de repos.

15. Dispositif selon la revendication 14, caractérisé en ce que ledit bâti mobile (14) comporte une plaque inférieure (75), une plaque supérieure (76) et trois colonnes (77) qui relient lesdites plaques et ledit bâti mobile (14) est relié audit bras (72) par une des trois colonnes (77$_1$) qui comporte un méplat (77a) sur lequel prend appui un galet (80) qui est disposé à l'extrémité d'un doigt (79) qui coulisse dans un alésage radial dudit bras et qui est poussé par un organe élastique (81) et qui comporte un bouchon fileté (82) permettant de régler la précontrainte de l'organe élastique, lequel bouchon comporte un alésage fileté axial dans lequel pénètre une tige (83) solidaire dudit doigt (79) et dans lequel une vis (84), servant de butée réglable à ladite tige (83), est vissée.

16. Dispositif selon la revendication 4 et 6, caractérisé en ce que ladite tête de détection (12) comporte une chambre (108) dont la face avant verticale (109) porte trois bagues (109a) qui sont disposées en triangle et qui délimitent chacune un alésage (109b) et le chapeau (26b) du boîtier mobile (26a) de chacun des capteurs horizontaux est engagé avec du jeu dans l'un de ces alésages et ladite chambre est alimentée en air comprimé à faible pression qui fuit par lesdits jeux.

17. Dispositif selon les revendications 7 et 16, caractérisé en ce que ladite tête de détection (12) comporte un vérin pneumatique à simple effet (113) à axe horizontal qui est disposé dans l'axe des trois capteurs horizontaux, lequel vérin comporte un ressort (115) antagoniste et la tige (116) dudit vérin porte une plaque de butée (117) qui vient en appui contre les butées à billes (111b) solidaires du boîtier mobile (26) des trois capteurs, de sorte que ledit vérin libère simultanément les trois capteurs horizontaux et il les rétracte simultanément en cas de coupure d'air comprimé.

### Claims

1. A device for detecting cracks in steel slabs (1) leaving a continuous casting installation by means of sensors (10, 11$_1$, 11$_2$, 11$_3$) employing eddy currents, which comprise an induction coil (24) which is supplied with A.C. voltage and means for detecting variations in said voltage which indicate the presence of a crack, characterized in that said device comprises two crack detection units (4g, 4d) which are disposed on either side of the passage of the slabs and each unit comprises one vertical sensor (10) which is maintained above the upper face of the slab (1), in the vicinity of an edge thereof, and a plurality of horizontal sensors (11$_1$, 11$_2$...11$_n$) which are located at different levels and which are maintained in the vicinity of a lateral face of the slab (1).

2. The device according to claim 1, characterized in that it further comprises two descaling and cooling units (5g, 5d) which are located on either side of the passage of the slabs, upstream of said detection units, (4g, 4d), and each descaling and cooling unit is mounted on a mobile frame (6a) which is displaced transversely with respect to the slab by a jack and which bears one or more vertical-axis rollers (6b) which are maintained applied against the side of the slab, descaling nozzles (7) which project against the lateral face and against a band on the edge of the upper face of the slab jets of water (8) at very high pressure, of the order of 150 bars and cooling nozzles (9) which spray the lateral face and the edge of the upper face of the slab.

3. The device according to any one of claims 1 and 2, characterized in that each crack detection unit comprises a mobile frame (14) which is equipped with vertical-axis casters and means for displacing said frame laterally with respect to the slab and to maintain said casters applied against a side of the slab.

4. The device according to claim 3, characterized in that said mobile frame (14) comprises guide columns ($16_1$, $16_2$, 77, 85) and each detection unit comprises a detection head (12) which slides vertically along said columns and which bears said sensors (10, $11_1$, $11_2$, $11_3$) and rollers of transverse horizontal axis ($18_1$, $18_2$) which are maintained applied against the upper face of the slab by the weight of the sliding head and each detection unit further comprises a vertical single-acting jack (22, 87, 88) which lifts said head (12) at the end of cycle.

5. The device according to any one of claims 1 to 4, characterized in that each sensor (10, $11_1$, $11_2$, $11_3$) comprises an induction coil (24) which is placed with clearance inside a mobile cylindrical casing (26) having a ceramic bottom (25a, 101), of small thickness, which is interposed between the end of the coil and the slab and it comprises means for circulating cooling water in the clearance between said coil (24) and the lateral wall as well as the bottom of said casing.

6. The device according to claim 5, characterized in that said mobile casing (26) comprises a hollow cylindrical body (26a) and a cap (26b) which is fixed to the front end of said body, which cap (26b) is equipped with rollers (29) whose axes are perpendicular to the longitudinal axis (y y1) of the slab and which are mounted on supports which may slide parallel to the axis (x x1) of said sensor.

7. The device according to claim 6, characterized in that said mobile casing (26) is guided axially by one or more ball bushes (46, 111a, 111b) and it is pushed forwardly by a piston (50, 26b) which moves with clearance in an axial bore (51, 109b, 121) and which is subjected to a forward thrust which is due to the loss of pressure produced by a leakage of air around said piston and which applies said rollers (29) against the surface of the slab with a weak, constant thrust.

8. The device according to claim 7, characterized in that each sensor is associated with an auxiliary single-acting pneumatic jack (57, 113) which is supplied with air in parallel with said leakage of air and which comprises a spring (59, 115) antagonistic to the air pressure and the rod (57b, 116) of said jack bears a stop (58, 117) which blocks said sensor in retracted position in the event of accidental cut-off of air or at the end of cycle.

9. The device according to claim 3, characterized in that said mobile frame (14) is supported by two parallel arms ($13_1$, $13_2$) forming a parallelogram articulated respectively on said mobile frame by vertical-axis articulations ($14_1$, $14_2$) and on a fixed frame by vertical-axis articulations ($15_1$, $15_2$) and a double-acting pneumatic jack (16) actuates one of said arms to displace said mobile frame (14) laterally with respect to the slab.

10. The device according to claim 9, characterized in that one of said arms ($13_2$) comprises a telescopic device (20) which allows a slight variation in length of said arm and a limited rotation of said frame and it further comprises a displacement sensor (21) which detects a variation in length of said arm ($13_2$) exceeding a limiting value and which automatically controls said jack (16).

11. The device according to claim 7, characterized in that the vertical sensor (10) of each detection unit comprises a counterweight (69) which balances the weight of the mobile part of said sensor.

12. The device according to claim 7, characterized in that the vertical sensor (10) of each detection unit comprises a balancing jack (124) which balances the weight of the mobile part of said sensor.

13. The device according to claim 2, characterized in that the descaling unit (5) and the detection unit (4) located on the same side of the slab are mounted on the same carriage (71) which is displaced along an axis (x x1) perpendicular to the longitudinal axis of the slab.

14. The device according to claims 3 and 13, characterized in that the mobile frame (14) is borne by an arm (72) connected to said carriage (71) by a vertical-axis articulation (73), which articulation comprises an oscillating jack (74) which drives said arm in a rotation of the order of 90° to dispose it parallel to the side of the slab in work position and parallel to the axis (x x1) of said carriage in rest position.

15. The device according to claim 14, characterized in that said mobile frame (14) comprises a lower plate (75), an upper plate (76) and three columns (77) which connect said plates and said mobile frame (14) is connected to said arm (72) by one of the three columns ($77_1$) which comprises a flat portion (77a) on which abuts a roller (80) which is disposed at the end of a finger (79) which slides in a radial bore in said arm and which is pushed by an elastic member (81) and which comprises a threaded stopper (82) making it possible to adjust the pre-stress of the elastic member, which stopper comprises an axial threaded bore in which penetrates a rod (83) fast with said finger (79) and in which a screw (84), serving as adjustable stop for said rod (83), is screwed.

16. The device according to claims 4 and 6, characterized in that said detection head (12) comprises a chamber (108) having a vertical front face (109) which bears three rings (109a) which are disposed in a triangle and which each define a bore (109b) and the cap (26b) of the mobile casing (26a) of each of the horizontal sensors is engaged with clearance in one of said bores and said chamber is supplied with compressed air at low pressure which escapes through said clearances.

17. The device according to claims 7 and 16, characterized in that said detection head (12) comprises a single-acting pneumatic jack (113) of horizontal axis which is disposed in the axis of the three horizontal sensors, which jack comprises an antagonistic spring (115) and the rod (116) of said jack bears a stop plate (117) which abuts against the ball bushes (111b) integral with mobile casing (26) of the three sensors, so that said jack simultaneously releases the three horizontal sensors and it retracts simultaneously in the event of cut-off of compressed air.

**Patentansprüche**

1. Vorrichtung zum Feststellen von Rissen an aus einer Stranggießanlage austretenden Stahlbrammen (1) mittels Wirbelstromaufnehmer (10, $11_1$, $11_2$, $11_3$), welche eine Induktionsspule (24), die mit Wechselspannung gespeist ist, und Mittel zum Feststellen von Veränderungen dieser Spannung, die auf das Vorhandensein eines Risses hindeuten, umfassen, dadurch gekennzeichnet, daß sie zwei Riß-Detektionseinheiten (4g, 4d) umfaßt, die beiderseits der Bahn der Brammen angeordnet sind, und jede Einheit einen vertikalen Aufnehmer (10), der über der Oberseite der Bramme (1) nahe einer Kante derselben gehalten ist, und mehrere horizontale Aufnehmer ($11_1$, $11_2$, ... $11_n$), die in unterschiedlichen Höhen angeordnet und nahe einer Seitenfläche der Bramme (1) gehalten sind, umfaßt.

2. Vorrichtung nach Anspruch 1, dadurch gekennzeichnet, daß sie weiters zwei Entzunderungs- und Kühleinheiten (5g, 5d) umfaßt, die beiderseits der Bahn der Brammen stromaufwärts von den Detektionseinheiten (4g, 4d) angeordnet sind, und jede Entzunderungs- und Kühleinheit auf einem beweglichen Rahmen (6a) montiert ist, der mittels eines Stelltriebs quer zur Bramme verschiebbar ist und eine oder mehrere Rollen (6b) mit vertikaler Achse trägt, welche an die Flanke der Bramme angedrückt gehalten sind, Entzunderungsdüsen (7) zum Spritzen von Wasserstrahlen (8) mit sehr hohem Druck in einem Bereich von 150 bar gegen die Seitenfläche und gegen ein am Rand der Oberseite der Bramme befindliches Band und Kühldüsen (9) zum Besprühen der Seitenfläche und des Randes der Oberseite der Bramme.

3. Vorrichtung nach einem der Ansprüche 1 und 2, dadurch gekennzeichnet, daß jede Riß-Detektionseinheit einen beweglichen Rahmen (14) umfaßt, der mit kleinen Rollen mit vertikaler Achse und mit Mitteln zum Verschieben des Rahmens seitlich gegenüber der Bramme und zum Halten der kleinen Rollen angedrückt an eine Flanke der Bramme ausgestattet ist.

4. Vorrichtung nach Anspruch 3, dadurch gekennzeichnet, daß der bewegliche Rahmen (14) Führungssäulen ($16_1$, $16_2$, 77, 85) umfaßt, und jede Detektionseinheit einen Suchkopf (12) umfaßt, der vertikal entlang der Säulen gleitet und die Aufnehmer (10, $11_1$, $11_2$, $11_3$) und Rollen mit horizontaler Querachse ($18_1$, $18_2$) trägt, die vom Gewicht des Gleitkopfes an die Oberseite der Bramme gedrückt gehalten sind, und jede Detektionseinheit weiters einen einfachwirkenden vertikalen Stelltrieb (22, 87, 88) umfaßt, der den Kopf (12) am Ende des Zyklus wieder hebt.

5. Vorrichtung nach einem der Ansprüche 1 bis 4, dadurch gekennzeichnet, daß jeder Aufnehmer (10, $11_1$, $11_2$, $11_3$) eine Induktionsspule (24) umfaßt, die mit Spiel im Inneren eines beweglichen zylindrischen Gehäuses (26) mit einem Boden (25a, 101) aus Keramik von geringer Dicke angeordnet ist, welches Gehäuse zwischen dem Ende der Spule und der Bramme eingesetzt ist, und daß er Mittel zum Zirkulieren von Kühlwasser in dem zwischen der Spule (24) und der Seitenwand sowie dem Boden des Gehäuses vorhandenen Spiel umfaßt.

6. Vorrichtung nach Anspruch 5, dadurch gekennzeichnet, daß das bewegliche Gehäuse (26) einen hohlen zylindrischen Körper (26a) und eine am Ende des Körpers befestigte Abdeckung (26b) umfaßt, welche Abdeckung (26b) mit Rollen (29) ausgestattet ist, deren Achsen senkrecht zur Längsachse (y $y_1$) der Bramme verlaufen und auf Trägern montiert sind, die parallel zur Achse (x $x_1$) des Aufnehmers gleiten können.

7. Vorrichtung nach Anspruch 6, dadurch gekennzeichnet, daß das bewegliche Gehäuse (26) von einer oder mehreren Kugelhülsen (46, 111a, 111b) axial geführt ist und von einem Kolben (50, 26b) nach vorne gestoßen wird, welcher mit Spiel in einer axialen Bohrung (51, 109b, 121) verschiebbar ist und einem Vorwärtsschub ausgesetzt ist, der auf den von einem Luftverlust rund um den Kolben erzeugten Druckverlust zurückgeht und die Rollen (29) mit geringem und konstantem Schub gegen die Oberfläche der Bramme drückt.

8. Vorrichtung nach Anspruch 7, dadurch gekennzeichnet, daß jeder Aufnehmer mit einem einfachwirkenden pneumatischen Hilfsstelltrieb (57, 113) in Verbindung steht, welcher parallel zum Luftverlust mit Luft gespeist ist und eine dem Luftdruck entgegenwirkende Feder (59, 115) umfaßt, und die Stange (57b, 116) des Stelltriebs einen Anschlag (58, 117) trägt, der den Aufnehmer bei einer zufälligen Luftunterbrechung oder am Ende des Zyklus in eingezogener Position blockiert.

9. Vorrichtung nach Anspruch 3, dadurch gekennzeichnet, daß der bewegliche Rahmen (14) von zwei parallelen Armen ($13_1$, $13_2$) getragen ist, die ein Gelenkparallelogramm am beweglichen Rahmen mittels Gelenken mit vertikaler Achse ($14_1$, $14_2$) bzw. an einem fixen Rahmen mittels Gelenken mit vertikaler Achse ($15_1$, $15_2$) bilden, und daß ein doppelwirkender pneumatischer Stelltrieb (16) zum Verschieben des beweglichen Rahmens (14) seitlich in bezug auf die Bramme einen der Arme betätigt.

10. Vorrichtung nach Anspruch 9, dadurch gekennzeichnet, daß einer der Arme ($13_2$) eine Teleskopeinrichtung (20) umfaßt, die eine geringe Längenänderung des Armes und eine begrenzte Rotation des Rahmens zuläßt, und daß er weiters einen Stellungsgeber (21) umfaßt, der eine Längenänderung des Armes (13$_2$), die über einen Grenzwert hinausgeht, feststellt und automatisch den Stelltrieb (16) ansteuert.

11. Vorrichtung nach Anspruch 7, dadurch gekennzeichnet, daß der vertikale Aufnehmer (10) jeder Detektionseinheit ein Gegengewicht (69) umfaßt, welches das Gewicht des beweglichen Teils des Aufnehmers ausgleicht.

12. Vorrichtung nach Anspruch 7, dadurch gekennzeichnet, daß der vertikale Aufnehmer (10) jeder Detektionseinheit einen Ausgleichzylinder (124) umfaßt, der das Gewicht des beweglichen Teils des Aufnehmers ausgleicht.

13. Vorrichtung nach Anspruch 2, dadurch gekennzeichnet, daß die Entzunderungseinheit (5) und die Detektionseinheit (4), die sich auf ein- und derselben Seite der Bramme befinden, auf demselben Wagen (71) montiert sind, der entlang einer Achse (x x$_1$) senkrecht zur Längsachse der Bramme verschiebbar ist.

14. Vorrichtung nach den Ansprüchen 3 und 13, dadurch gekennzeichnet, daß der bewegliche Rahmen (14) von einem Arm (72) getragen ist, der über ein Gelenk (73) mit vertikaler Achse mit dem Wagen (71) verbunden ist, welches Gelenk einen Oszillations-Stelltrieb (74) umfaßt, der den Arm in eine Rotation in der Größenordnung von 90° versetzt, um ihn parallel zur Flanke der Bramme in die Arbeitsposition und parallel zur Achse (x x$_1$) des Wagens in die Ruheposition zu bringen.

15. Vorrichtung nach Anspruch 14, dadurch gekennzeichnet, daß der bewegliche Rahmen (14) eine untere Platte (75), eine obere Platte (76) und drei die Platten verbindende Säulen (77) umfaßt, und der bewegliche Rahmen (14) mit dem Arm (72) mittels einer der drei Säulen (77$_1$) verbunden ist, welche eine Abflachung (77a) aufweist, auf der sich eine Rolle (80) abstützt, die am Ende eines Fingers (79) angeordnet ist, der in einer radialen Bohrung des Arms gleitet und mit einem elastischen Organ (81) gestoßen wird und der einen Stopfen (82) mit Gewinde zum Regulieren der Vorspannung des elastischen Organs umfaßt, welcher Stopfen eine axiale Gewindebohrung aufweist, in die eine mit dem Finger (79) verbundene Stange (83) reicht und in die eine für die Stange (83) als regulierbarer Anschlag dienende Schraube (84) eingeschraubt ist.

16. Vorrichtung nach Anspruch 4 und 6, dadurch gekennzeichnet, daß der Detektionskopf (12) eine Kammer (108) aufweist, deren vertikale Vorderseite (109) drei Ringe (109a) trägt, die dreieckförmig angeordnet sind und jeweils eine Bohrung (109b) begrenzen, daß die Abdeckung (26b) des beweglichen Gehäuses (26a) jedes der horizontalen Aufnehmer mit Spiel in eine dieser Bohrungen eingesetzt ist, und daß die Kammer mit Druckluft geringen Drucks, die über die Spiele austritt, gespeist ist.

17. Vorrichtung nach den Ansprüchen 7 und 16, dadurch gekennzeichnet, daß der Detektionskopf (12) einen einfachwirkenden pneumatischen Stelltrieb (113) mit horizontaler Achse umfaßt, der in Achsrichtung der drei horizontalen Aufnehmer angeordnet ist, welcher Stelltrieb eine entgegenwirkende Feder (115) aufweist, und die Stange (116) des Stelltriebs eine Anschlagplatte (117) trägt, die in Anschlag an den mit dem beweglichen Gehäuse (26) der drei Aufnehmer verbundenen Längskugellagern (111b) kommt, sodaß der Stelltrieb gleichzeitig die drei horizontalen Aufnehmer freigibt und sie bei einer Unterbrechung der Druckluft gleichzeitig einzieht.

Fig.1

Fig-2

Fig-3

Fig-4

Fig-5

Fiq.6

Fig-7

Fig-8

0 115 735

76

$77_2$

91

86

87

88

89

90

12

75

Fig_9

Fig. 10

Fig.11

0 115 735

Fig. 12

0 115 735